# EUROPEAN PATENT APPLICATION

(11) **EP 4 394 988 A1**
(43) Date of publication of application: **03.07.2024**
(21) Application number: 22871548.8
(22) Date of filing: 05.07.2022
(51) Int. Cl.: H01M 10/0568, H01M 10/0525, H01M 4/64

(54) **ELECTROCHEMICAL DEVICE AND ELECTRONIC DEVICE**

(30) Priority: 22.09.2021 CN 202111106361
(71) Applicant: Ningde Amperex Technology Limited, Ningde, Fujian 352100 (CN)
(72) Inventor: LIU, Junfei, Ningde, Fujian 352100 (CN); ZHOU, Shaoyun, Ningde, Fujian 352100 (CN); LAN, Disheng, Ningde, Fujian 352100 (CN); XU, Yanyan, Ningde, Fujian 352100 (CN)
(74) Representative: Icosa
(86) International application number: PCT/CN2022/103868
(87) International publication number: WO 2023/045487

(57) **Abstract**

This application relates to an electrochemical apparatus and an electronic apparatus. The electrochemical apparatus of this application includes a positive electrode, a negative electrode, a separator, and an electrolyte, where the positive electrode includes a positive electrode current collector, a positive electrode active substance layer, and a conductive coating disposed between the positive electrode current collector and the positive electrode active substance layer; the electrolyte includes a first fluorine-containing metal salt, where the first fluorine-containing metal salt includes at least one of fluorine-containing sulfonimide lithium salts; and the electrochemical apparatus satisfies the following relationship: 0.1≤X/d≤105, where X g/m² is mass per unit area of fluorine-containing sulfonimide lithium salt contained in the electrochemical apparatus on one surface of the positive electrode current collector, and d µm is thickness of the conductive coating on one surface of the positive electrode current collector. A combination of the conductive coating of the positive electrode and organic lithium salts in the electrolyte in this application can not only improve high-rate cycling performance of the electrochemical apparatus and reduce temperature rise of the electrochemical apparatus but also alleviate possible corrosion on the positive electrode current collector by the organic lithium salts and enhance long-term stability of the electrochemical apparatus.

## Description

### CROSS-REFERENCE TO RELATED APPLICATIONS

This application claims priority to Chinese Patent Application No. 202111106361.0, filed on September 22, 2021 and entitled "ELECTROCHEMICAL APPARATUS AND ELECTRONIC APPARATUS", which is incorporated herein by reference in its entirety.

### TECHNICAL FIELD

This application relates to the field of energy storage, and in particular, to an electrochemical apparatus and an electronic apparatus.

### BACKGROUND

Lithium-ion batteries have advantages such as high energy density, high working voltage, light weight, low self-discharge rate, long cycle life, no memory effect, and environmental friendliness. In addition to being applied to intelligent products such as mobile phones, notebook computers, cameras, and other electronic products, lithium-ion batteries are also widely needed in the field of higher-power products such as battery electric vehicles, electric tools, drones, and electric ships. High-power-density products require a lower impedance and impose increasingly high requirements on gas production at high temperature and safety performance. Therefore, it is a very important development tendency to reduce impedance inside components and impedance between components in electrode assemblies and to reduce heat production.

### SUMMARY

According to a first aspect, this application provides an electrochemical apparatus, including a positive electrode, a negative electrode, a separator, and an electrolyte, where the positive electrode includes a positive electrode current collector, a positive electrode active substance layer, and a conductive coating disposed between the positive electrode current collector and the positive electrode active substance layer; the electrolyte includes a first fluorine-containing metal salt, where the first fluorine-containing metal salt includes at least one of fluorine-containing sulfonimide lithium salts; and the electrochemical apparatus satisfies the following relationship: 0.1≤X/d≤105, where X g/m² is mass per unit area of fluorine-containing sulfonimide lithium salt contained in the electrochemical apparatus on one surface of the positive electrode current collector, and d µm is thickness of the conductive coating on one surface of the positive electrode current collector.

The fluorine-containing sulfonimide lithium salts provide good dissociation to improve conductivity of the electrolyte, but may form soluble substances with metal ions, increasing a risk of corrosion on a current collector. In this application, the fluorine-containing sulfonimide lithium salts cooperate with the conductive coating. The conductive coating is introduced to reduce contact resistance between the current collector and an active material and reduce, to a specific extent, a risk of corrosion caused by the fluorine-containing sulfonimide lithium salt being in contact with the current collector. This can not only improve high-rate cycling performance of the electrochemical apparatus and reduce temperature rise of the electrochemical apparatus, but also alleviate corrosion on the positive electrode current collector caused by the fluorine-containing sulfonimide lithium salts and enhance long-term stability of the electrochemical apparatus.

According to some embodiments of this application, 0.2≤X/d≤100. In some embodiments of this application, 10≤X/d≤100. In some embodiments of this application, 40≤X/d≤100. An excessively high value of X/d increases a risk of corrosion on the current collector caused by the first fluorine-containing metal salt and affects long-term stability of the electrochemical apparatus. An excessively low value of X/d may increase migration hindrance of electrons or ions and affect performance of the electrochemical apparatus at a high rate.

According to some embodiments of this application, 0.1≤X≤25. In some embodiments, 2≤X≤20.

According to some embodiments of this application, the first fluorine-containing metal salt satisfies at least one of the following conditions (a) and (b): (a) the fluorine-containing sulfonimide lithium salt includes at least one of lithium salts represented by formula I, 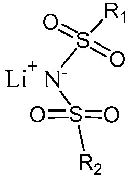 formula I, where R₁ and R₂ are each independently selected from fluorine, a C₁-C₄ alkyl group, or a C₁-C₄ fluoroalkyl group, where at least one of R₁ and R₂ includes fluorine; and (b) the fluorine-containing sulfonimide lithium salt includes at least one of lithium bis(fluorosulfonyl)imide or lithium bis(trifluoromethylsulfonyl)imide.

According to some embodiments of this application, the first fluorine-containing metal salt further includes lithium hexafluorophosphate, where based on a total mass of the electrolyte, a mass percentage Y% of the first fluorine-containing metal salt satisfies 8≤Y≤25.

According to some embodiments of this application, the electrolyte further includes a second fluorine-containing metal salt. The second fluorine-containing metal salt satisfies at least one of the following conditions (c) to (e): (c) a mass percentage of fluorine atoms in a molecule of the second fluorine-containing metal salt is greater than or equal to 10%; (d) based on a total mass of the electrolyte, a mass percentage of the second fluorine-containing metal salt ranges from 0.01% to 5.0%; and (e) the second fluorine-containing metal salt includes at least one of fluorine-containing alkali metal salts, preferably, the fluorine-containing alkali metal salt includes at least one of fluorine-containing lithium salt, fluorine-containing sodium salt, or fluorine-containing cesium salt, and more preferably, the second fluorine-containing metal salt includes at least one of fluorinated boron-containing lithium salt, fluorinated boron-containing sodium salt, fluorinated boron-containing cesium salt, fluorinated lithium phosphate salt, fluorinated sodium phosphate salt, fluorinated cesium phosphate salt, or lithium 4,5-dicyano-2-trifluoromethylimidazole. In some embodiments, the mass percentage of the fluorine atoms in the molecule of the second fluorine-containing metal salt is greater than or equal to 10%, and the second fluorine-containing metal salt includes at least one of fluorine-containing alkali metal salts. In some embodiments, based on the total mass of the electrolyte, the mass percentage of the second fluorine-containing metal salt ranges from 0.01% to 5.0%, and the second fluorine-containing metal salt includes at least one of fluorine-containing alkali metal salts. Addition of the second fluorine-containing metal salt may form a protective layer on a surface of an electrode, reducing side reactions. In addition, F⁻ generated by decomposition of the second fluorine-containing metal salt may form a metal fluoride, for example, an AlF₃ passivation layer on a surface of the current collector. This can further reduce a risk of corrosion on the current collector.

According to some embodiments of this application, the electrolyte further includes an additive. The additive satisfies at least one of the following conditions (f) and (g): (f) the additive includes at least one of sultone, cyclic carbonate, or fluorinated cyclic carbonate; and (g) based on the total mass of the electrolyte, a mass percentage of the additive ranges from 0.01% to 10%.

According to some embodiments of this application, the conductive coating satisfies at least one of the following conditions (h) and (i): (h) thickness d µm of the conductive coating satisfies: 0.1≤d≤5; and (i) the conductive coating includes at least one of a carbon material or a conductive polymer material.

According to some embodiments of this application, the electrochemical apparatus satisfies at least one of the following conditions (j) and (k): (j) tensile strength of the positive electrode current collector is R MPa, where R≥150; and (k) the active substance layer includes at least one of lithium cobalt oxide, nickel cobalt manganese, lithium iron phosphate, lithium manganate, or lithium-rich manganese-based material.

According to a second aspect, this application provides an electronic apparatus, including the electrochemical apparatus according to the first aspect.

In this application, the conductive coating of the positive electrode and organic lithium salts such as fluorine-containing sulfonimide lithium salts in the electrolyte are combined, which can not only improve high-rate cycling performance of the electrochemical apparatus and reduce temperature rise of the electrochemical apparatus, but also alleviate corrosion on the positive electrode current collector caused by the organic lithium salts and enhance long-term stability of the electrochemical apparatus.

### DESCRIPTION OF EMBODIMENTS

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or single numerical value, as a lower limit or an upper limit, may be combined with any other point or single numerical value or combined with another lower limit or upper limit to form a range not expressly recorded.

In the descriptions of this specification, "more than" or "less than" is inclusive of the present number unless otherwise specified.

Unless otherwise specified, terms used in this application have commonly known meanings generally understood by persons skilled in the art. Unless otherwise specified, numerical values of parameters mentioned in this application may be measured by using various measurement methods commonly used in the art (for example, testing may be performed by using a method provided in the embodiments of this application).

A list of items connected by the terms "at least one of", "at least one piece of", "at least one kind of", or the like may mean any combination of the listed items. For example, if items A and B are listed, the phrase "at least one of A and B" means only A; only B; or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single constituent or a plurality of constituents. The item B may contain a single constituent or a plurality of constituents. The item C may contain a single constituent or a plurality of constituents.

According to a first aspect, this application provides an electrochemical apparatus, including a positive electrode, a negative electrode, a separator, and an electrolyte, where the positive electrode includes a positive electrode current collector, a positive electrode active substance layer, and a conductive coating disposed between the positive electrode current collector and the positive electrode active substance layer; the electrolyte includes a first fluorine-containing metal salt, where the first fluorine-containing metal salt includes at least one of fluorine-containing sulfonimide lithium salts; and the electrochemical apparatus satisfies the following relationship: 0.1≤X/d≤105, where X g/m² is mass per unit area of fluorine-containing sulfonimide lithium salt contained in the electrochemical apparatus on one surface of the positive electrode current collector, and d µm is thickness of the conductive coating on one surface of the positive electrode current collector.

The fluorine-containing sulfonimide lithium salts provide good dissociation to improve conductivity of the electrolyte, but may form soluble substances with metal ions, increasing a risk of corrosion on a current collector. In this application, the fluorine-containing sulfonimide lithium salts cooperate with the conductive coating. The conductive coating is introduced to reduce contact resistance between the current collector and an active material and reduce, to a specific extent, a risk of corrosion caused by the fluorine-containing sulfonimide lithium salt being in contact with the current collector. This can not only improve high-rate cycling performance of the electrochemical apparatus and reduce temperature rise of the electrochemical apparatus, but also alleviate corrosion on the positive electrode current collector caused by the fluorine-containing sulfonimide lithium salts and enhance long-term stability of the electrochemical apparatus.

According to some embodiments of this application, X/d is 0.5, 5, 15, 25, 30, 35, 45, 47, 50, 53, 55, 57, 60, 43, 65, 67, 70, 73, 75, 77, 83, 85, 87, 90, 93, 95, 97, 103, or in a range of any two of these values. According to some embodiments of this application, 0.2≤X/d≤100. In some embodiments of this application, 10≤X/d≤100. In some embodiments of this application, 40≤X/d≤100. An excessively high value of X/d increases a risk of corrosion on the current collector caused by the first fluorine-containing metal salt and affects long-term stability of the electrochemical apparatus. An excessively low value of X/d may increase migration hindrance of electrons or ions and affect performance of the electrochemical apparatus at a high rate.

According to some embodiments of this application, 0.1≤X≤25. In some embodiments, X is 0.7, 1, 3, 5, 7, 9, 11, 13, 15, 17, 19, 23, or in a range of any two of these values. In some embodiments, 2≤X≤20.

According to some embodiments of this application, the fluorine-containing sulfonimide lithium salt includes at least one of lithium salts represented by formula I, 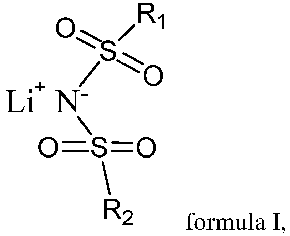 where R₁ and R₂ are each independently selected from fluorine, a C₁-C₄ alkyl group, or a C₁-C₄ fluoroalkyl group, where at least one of R₁ and R₂ includes fluorine. In some embodiments, R₁ is fluorine, a C₁-C₄ alkyl group, or a C₁-C₄ fluoroalkyl group, and R₂ is fluorine or a C₁-C₄ fluoroalkyl group. In some embodiments, R₁ and R₂ are the same and both are fluorine or a C₁-C₄ fluoroalkyl group. In some embodiments, the C₁-C₄ alkyl group is a methyl group, an ethyl group, an n-propyl group, an isopropyl group, an n-butyl group, an isobutyl group, or a tert-butyl group. In some embodiments, the C₁-C₄ fluoroalkyl group is a fluoromethyl group, a fluoroethyl group, a fluoro-n-propyl group, a fluoroisopropyl group, a fluoro-n-butyl group, a fluoroisobutyl group, or a fluoro-tert-butyl group, where fluorination represents at least one hydrogen atom of the C₁-C₄ alkyl group being substituted by a fluorine atom. In some embodiments, the C₁-C₄ fluoroalkyl group is a monofluoromethyl group, a difluoromethyl group, a trifluoromethyl group, a trifluoroethyl group, or a hexafluoroisopropyl group.

In some embodiments, the fluorine-containing sulfonimide lithium salt includes at least one of lithium bis(fluorosulfonyl)imide or lithium bis(trifluoromethylsulfonyl)imide.

According to some embodiments of this application, the first fluorine-containing metal salt further includes lithium hexafluorophosphate, where based on a total mass of the electrolyte, a mass percentage Y% of the first fluorine-containing metal salt satisfies 8≤Y≤25. In some embodiments, Y is 9, 10, 11, 13, 15, 17, 19, 20, 23, 24, or in a range of any two of these values.

According to some embodiments of this application, the electrolyte further includes a second fluorine-containing metal salt. Addition of the second fluorine-containing metal salt may form a protective layer on a surface of an electrode, reducing side reactions. In addition, F⁻ generated by decomposition of the second fluorine-containing metal salt may form a metal fluoride, for example, an AlF₃ passivation layer on a surface of the current collector. This can further reduce a risk of corrosion on the current collector.

In some embodiments of this application, a mass percentage of fluorine atoms in a molecule of the second fluorine-containing metal salt is greater than or equal to 10%. In some embodiments, the second fluorine-containing metal salt includes at least one of fluorine-containing alkali metal salts such as fluorine-containing lithium salt, fluorine-containing sodium salt, or fluorine-containing cesium salt.

According to some embodiments of this application, based on the total mass of the electrolyte, a mass percentage of the second fluorine-containing metal salt ranges from 0.01% to 6.0%. In some embodiments, based on the total mass of the electrolyte, the mass percentage of the second fluorine-containing metal salt is 0.2%, 0.4%, 0.6%, 0.8%, 1.0%, 1.5%, 2.3%, 2.5%, 3.0%, 3.5%, 4.0%, 4.5%, 5.5%, or in a range of any two of these values. In some embodiments, based on the total mass of the electrolyte, the mass percentage of the second fluorine-containing metal salt ranges from 0.01% to 5.0%. In some embodiments, the second fluorine-containing metal salt includes at least one of fluorine-containing alkali metal salts such as fluorine-containing lithium salt, fluorine-containing sodium salt, or fluorine-containing cesium salt.

According to some embodiments of this application, the second fluorine-containing metal salt includes at least one of fluorine-containing alkali metal salts. In some embodiments, the fluorine-containing alkali metal salt includes at least one of fluorine-containing lithium salt, fluorine-containing sodium salt, or fluorine-containing cesium salt. In some embodiments, the second fluorine-containing metal salt includes at least one of fluorinated boron-containing lithium salt, fluorinated boron-containing sodium salt, fluorinated boron-containing cesium salt, fluorinated lithium phosphate salt, fluorinated sodium phosphate salt, fluorinated cesium phosphate salt, or lithium 4,5-dicyano-2-trifluoromethylimidazole.

In some embodiments of this application, the second fluorine-containing metal salt includes at least one of second fluorine-containing lithium salts. In some embodiments of this application, the second fluorine-containing lithium salt includes at least one of fluorinated boron-containing lithium salt, fluorinated lithium phosphate salt, or lithium 4,5-dicyano-2-trifluoromethylimidazole. In some embodiments of this application, the fluorinated boron-containing lithium salts include at least one of the following substances: 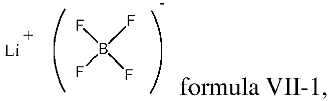 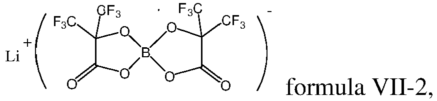 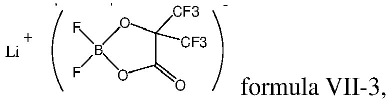 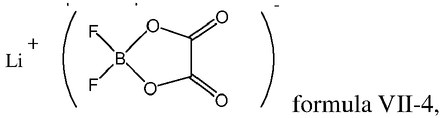 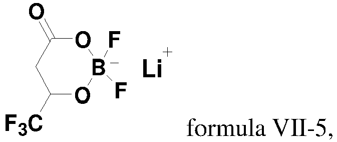 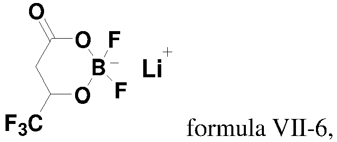 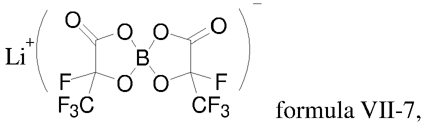 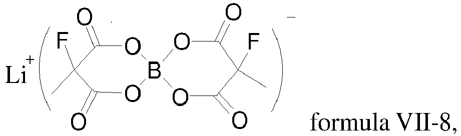 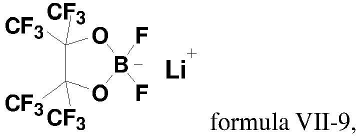 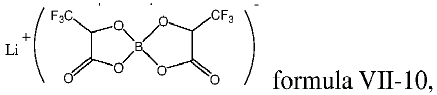 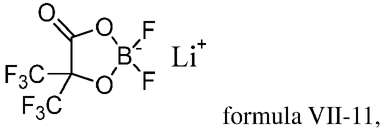 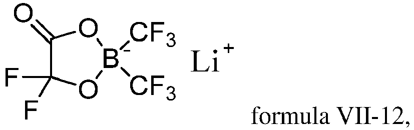 and 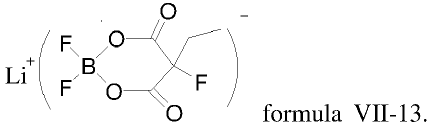 In some embodiments of this application, the fluorinated lithium phosphate salt includes at least one of lithium difluorophosphate, lithium tetrafluoro(oxalato)phosphate (LiOTFP), or lithium difluoro(oxalate)phosphate.

According to some embodiments of this application, the second fluorine-containing metal salt includes a second fluorine-containing cesium salt. In some embodiments, the second fluorine-containing cesium salt includes at least one of fluorinated boron-containing cesium salts. In some embodiments, the fluorinated boron-containing cesium salt is cesium difluorooxalate borate.

According to some embodiments of this application, the second fluorine-containing metal salt includes a second fluorine-containing sodium salt. In some embodiments, the second fluorine-containing sodium salt includes at least one of fluorinated sodium phosphate salts. In some embodiments, the fluorinated sodium phosphate salt includes at least one of sodium monofluorophosphate or sodium difluorophosphate.

According to some embodiments of this application, the electrolyte further includes an additive, and the additive includes at least one of sultone, cyclic carbonate, or fluorinated cyclic carbonate. According to some embodiments of this application, based on the total mass of the electrolyte, a mass percentage of the additive ranges from 0.01% to 11%. In some embodiments, based on the total mass of the electrolyte, the mass percentage of the additive is 0.05%, 0.5%, 1%, 2%, 3%, 4%, 5%, 6%, 7%, 8%, 9%, 10.5%, or in a range of any two of these values. In some embodiments, based on the total mass of the electrolyte, the mass percentage of the additive ranges from 0.01% to 10%.

According to some embodiments of this application, the sultone includes a compound of formula III: 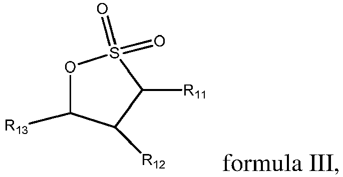 where R₁₁, R₁₂, and R₁₃ are each independently selected from hydrogen, halogen, hydrocarbyl, or halogen-containing hydrocarbyl.

In some embodiments, R₁₁, R₁₂, and R₁₃ are each independently selected from a C₁-C₆ alkyl group, a C₂-C₆ alkenyl group, a C₂-C₆ alkynyl group, a halogen-containing C₁-C₆ alkyl group, a halogen-containing C₂-C₆ alkenyl group, or a halogen-containing C₂-C₆ alkynyl group. In some embodiments, the C₁-C₆ alkyl group is a methyl group, an ethyl group, a propyl group, a butyl group, a pentyl group, or the like. In some embodiments, the C₂-C₆ alkenyl group is a vinyl group, a propenyl group, or a butenyl group. In some embodiments, the C₂-C₆ alkenyl group is an alkynyl group, a propynyl group, or a butynyl group. The halogen mentioned in this application refers to F, Cl, Br, or I.

In some embodiments, a sultone compound includes at least one of

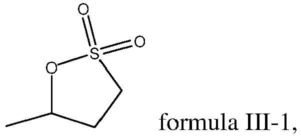

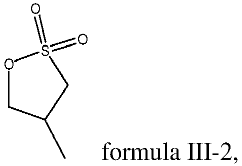

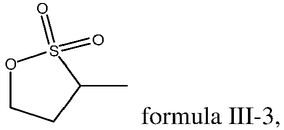

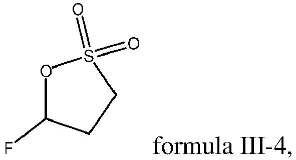

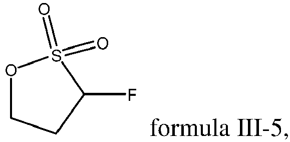

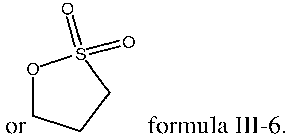

According to some embodiments of this application, the fluorinated cyclic carbonate includes at least one of compounds of formula IV: 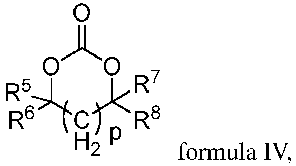 in formula IV, R⁵, R⁶, R⁷, and R⁸ each independently represent a hydrogen atom, a fluorine atom, or a C₁-C₄ alkyl group, at least one of R⁵, R⁶, R⁷, and R⁸ is a fluorine atom, and p is 0, 1, 2, 3, or 4. In some embodiments, the fluorinated cyclic carbonate includes at least one of fluoroethylene carbonate (FEC), difluoroethylene carbonate (DFEC), fluoropropylene carbonate, difluoropropylene carbonate, trifluoropropylene carbonate, trifluoromethylpropylene carbonate, or fluorobutylene carbonate.

According to some embodiments of this application, the cyclic carbonate includes at least one of compounds of formula V: 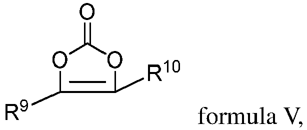 in formula V, R⁹ and R¹⁰ each independently represent a hydrogen atom, a C₁-C₄ alkyl group, or a C₂-C₄ alkenyl group. In some embodiments, the cyclic carbonate includes at least one of vinylene carbonate (VC) or vinylethylene carbonate.

According to some embodiments of this application, thickness of the conductive coating d µm satisfies: 0.2≤d≤5. In some embodiments, d is 0.4, 0.6, 0.8, 1.0, 1.5, 2.5, 3.0, 3.5, 4.0, 4.5, or in a range of any two of these values. In some embodiments, thickness of the conductive coating d µm satisfies: 0.2≤d≤2.

According to some embodiments of this application, the conductive coating includes at least one of a carbon material or a conductive polymer material. In some embodiments, the carbon material includes at least one of carbon nanotubes, carbon fibers, or conductive carbon black.

According to some embodiments of this application, tensile strength of the positive electrode current collector of the electrochemical apparatus is R MPa, where R≥150. In some embodiments, 150≤R≤350. In some embodiments, 150≤R≤300. According to some embodiments of this application, the active substance layer of the positive electrode plate of the electrochemical apparatus includes at least one of lithium cobalt oxide, nickel cobalt manganese, lithium iron phosphate, lithium manganate, or lithium-rich manganese-based material.

The material, composition, and manufacturing method of the negative electrode used in the electrochemical apparatus of this application may include any technology disclosed in the prior art. According to some embodiments of this application, the negative electrode includes a negative electrode current collector and a negative electrode active material layer.

According to some embodiments of this application, the negative electrode active material layer includes a negative electrode active material, and the negative electrode active material may include a material that reversibly intercalates or deintercalates lithium ions, lithium metal, a lithium metal alloy, a material capable of doping or dedoping lithium, or a transition metal oxide such as Si or SiOₓ (0<x<2), or the like. The material that reversibly intercalates or deintercalates lithium ions may be a carbon material. The carbon material may be any carbon-based negative electrode active substance commonly used in a lithium-ion rechargeable electrochemical apparatus. Examples of the carbon material include crystalline carbon, amorphous carbon, and combinations thereof. The crystalline carbon may be amorphous or plate-shaped, flake-shaped, spherical, or fiber-shaped natural graphite or artificial graphite. The amorphous carbon may be soft carbon, hard carbon, a mesophase pitch carbonization product, burnt coke, or the like. Both low crystalline carbon and high crystalline carbon can be used as the carbon material. The low crystalline carbon material may generally include soft carbon and hard carbon. The high crystalline carbon material may generally include natural graphite, crystalline graphite, pyrolytic carbon, a mesophase pitch-based carbon fiber, mesophase carbon microbeads, mesophase pitch, and high-temperature calcined carbon (such as petroleum or coke derived from coal tar pitch).

According to some embodiments of this application, the negative electrode active material layer includes a binder, and the binder may include various binder polymers, for example, difluoroethylene-hexafluoropropylene (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, or nylon, but not limited to thereto.

According to some embodiments of this application, the negative electrode active material layer further includes a conductive material to improve electrode conductivity. Any conductive material that causes no chemical change can be used as the conductive material. Examples of the conductive material include: a carbon-based material such as natural graphite, artificial graphite, carbon black, acetylene black, Ketjen black, or carbon fiber; a metal-based material such as metal powder or metal fiber including copper, nickel, aluminum, or silver; a conductive polymer such as a polyphenylene derivative; or any mixture thereof. The current collector may be copper foil, nickel foil, stainless steel foil, titanium foil, nickel foam, copper foam, a polymer substrate coated with a conductive metal, or a combination thereof.

The separator used in the electrochemical apparatus according to this application is not particularly limited to any material or shape, and may be based on any technology disclosed in the prior art. In some examples, the separator includes a polymer or an inorganic substance formed by a material stable to the electrolyte of this application.

For example, the separator may include a substrate layer and a surface treatment layer. The substrate layer is a non-woven fabric, membrane, or composite membrane having a porous structure, and a material of the substrate layer is selected from at least one of polyethylene, polypropylene, polyethylene terephthalate, and polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance.

The inorganic substance layer includes inorganic particles and the binder. The inorganic particles are selected from at least one of aluminum oxide, silicon oxide, magnesium oxide, titanium oxide, hafnium oxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxy, polymethyl methacrylate, polytetrafluoroethylene, and polyhexafluoropropylene.

The polymer layer includes a polymer, and a material of the polymer is selected from at least one of polyamide, polyacrylonitrile, acrylate polymer, polyacrylic acid, polyacrylate, polyvinylpyrrolidone, polyvinyl alkoxy, polyvinylidene fluoride, and poly(vinylidene fluoride-hexafluoropropylene).

In some examples, the electrochemical apparatus of this application includes but is not limited to: all kinds of primary batteries, secondary batteries, fuel cells, solar cells, or capacitors. In some examples, the electrochemical apparatus is a lithium secondary battery. In some examples, the lithium secondary battery includes but is not limited to: a lithium metal secondary battery, a lithium-ion secondary battery, a lithium polymer secondary battery or a lithium-ion polymer secondary battery.

According to a second aspect, this application provides an electronic apparatus, including the electrochemical apparatus according to the first aspect.

The electronic device or apparatus in this application is not particularly limited. In some examples, the electronic device of this application includes but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, and the like.

The following further describes this application with reference to embodiments. It should be understood that these specific embodiments are merely intended to illustrate this application but not to limit the scope of this application.

### Preparation of lithium-ion batteries in examples and comparative examples

### (1) Preparation of positive electrode plate

A Super P conductive solution with a solid content of 65% was first applied evenly on a surface of an aluminum foil of a positive electrode current collector to obtain an aluminum foil containing a conductive coating.

A positive electrode active material Li(Ni_{0.5}Co_{0.2}Mn_{0.3})O₂, a conductive agent Super P, and a binder polyvinylidene fluoride were mixed at a weight ratio of 96:2.2:1.8, N-methylpyrrolidone (NMP) was added, and then the resulting mixture was evenly stirred by using a vacuum mixer to obtain a positive electrode slurry, where a solid content of the positive electrode slurry was 72 wt%; the positive electrode slurry was applied evenly on the aluminum foil containing the conductive coating; and the aluminum foil on which the positive electrode slurry was applied was dried at 85°C, followed by cold pressing, cutting, slitting, and drying in vacuum at 85°C for 4 hours to obtain a positive electrode plate. The positive electrode plate had a surface density of 14.0 mg/cm² and a compacted density of 3.3 g/cm³.

### (2) Preparation of negative electrode plate

Artificial graphite serving as a negative electrode active material, a conductive agent Super P, sodium carboxymethyl cellulose (CMC) serving as a thickener, and styrene butadiene rubber (SBR) serving as a binder were mixed at a weight ratio of 96:2:0.8:1.2, deionized water was added, and then the resulting mixture was stirred by using a vacuum mixer to obtain a negative electrode slurry, where a solid content of the negative electrode slurry was 54 wt%; the negative electrode slurry was applied evenly on a copper foil of a negative electrode current collector; and the copper foil on which the negative electrode slurry was applied was dried at 85°C, followed by cold pressing, cutting, slitting, and drying in vacuum at 120°C for 12 hours to obtain a negative electrode plate.

### (3) Preparation of electrolyte

A solvent (with a mass ratio of EC/DEC/EMC=3/2/5), an additive, and a lithium salt were mixed according to required amounts in a dry argon atmosphere glove box. Specifically, the solvent was first added, then the additive was added, and the lithium salt was added after the additive was dissolved and fully stirred, followed by mixing evenly to obtain an electrolyte.

### (4) Preparation of separator

A polyethylene (PE) separator with a thickness of 9 µm was selected, then a PDVF slurry and a slurry of inorganic particles (in which a ratio of flake-shaped boehmite to Al₂O₃ was 70:30) were applied on the separator, and then the separator was dried to obtain a final separator, where a thickness of a coating was 3 µm, and a porosity of the separator was 55%.

### (5) Preparation of lithium-ion battery

The positive electrode plate, the separator, and the negative electrode plate were stacked in order, so that the separator was sandwiched between the positive electrode plate and the negative electrode plate for separation, and then wound to obtain a bare battery. The bare battery was placed in an outer packaging aluminum foil-plastic film after tabs were welded. The foregoing prepared electrolyte was injected into the dried bare battery, followed by processes such as vacuum packaging, standing, formation (charging to 3.3 V at a constant current of 0.02C, then charging to 3.6 V at a constant current of 0.1C), shaping, and capacity testing to obtain a soft pack lithium-ion battery, where an internal resistance of the battery was tested to be 1.5±0.5 mΩ.

### Test method

1. Test of thickness of conductive coating: A positive electrode plate including a conductive coating, an active substance coating, and an aluminum foil was used, a central axis in a length direction of the electrode plate was served as a section, a central point was served as a center, a section with a width of 1 cm was used, thickness of the aluminum foil was measured to be h mm by observing through SEM, thickness of the aluminum foil plus thickness of the conductive coating was H mm, thickness of the conductive coating was d=(H-h)/2, and 5 points were taken and averaged.
2. Test of value of X: Length and width of a positive electrode plate current collector were first measured to obtain an area S m² of the current collector, then an electrolyte in a battery was obtained through centrifugation, and an ion chromatograph was used for testing to obtain a mass percentage m% of fluorine-containing sulfonimide lithium salts in the electrolyte;
   total mass of the fluorine-containing sulfonimide lithium salts in the battery: a total mass of the battery was first weighed, then the battery was disassembled to obtain a battery body (a separator, a positive electrode plate/negative electrode plate), a tab, and an outer packaging aluminum-plastic film; the battery body was soaked in a dimethyl carbonate solvent for 48 hours and then dried; a total mass M g of the electrolyte in the final battery was obtained by subtracting a mass of the tab, a mass of the outer package, and a mass of the dried battery body from the total mass of the battery, where a total mass of the fluorine-containing sulfonimide lithium salts in the battery was m%×M g; and
   mass per unit area of fluorine-containing sulfonimide lithium salt contained in the electrochemical apparatus on one surface of the positive electrode current collector was X g/m²=m%×M g/S m².
3. Test of tensile strength of positive electrode current collector: Aluminum foil with a length greater than 30 cm and a width of 8 mm was taken, where thickness of the aluminum foil was h mm; the aluminum foil was pulled by using a Gotech tensile machine at a speed of 1 mm/min, and the test was completed when the aluminum foil was broken; a tensile force value F(N) was obtained through software that came with an instrument; and a tensile strength R is equal to F/8/h.
4. Test of discharge performance of lithium-ion battery: A lithium-ion battery was placed in a 25°C thermostat and left standing for 30 minutes, so that the lithium-ion battery reached a constant temperature. The lithium-ion battery that had reached a constant temperature was charged to a voltage of 4.35 V at a constant current of 5.0C, and then charged to a current of 0.05C at a constant voltage of 4.35 V Then the lithium-ion battery was discharged to a voltage of 3.0 V at a constant current of 11.0C. In this process, a multi-channel temperature logger was used for monitoring surface temperature rise of the battery.
5. High-temperature cycle test of lithium-ion battery: A lithium-ion battery was placed in a 45°C high-temperature furnace, then charged to a voltage of 4.35 V at a constant current of 5.0C, charged to a current of 0.05C at a constant voltage, left standing for 15 minutes, then discharged to a voltage of 3.0 V at a constant current of 11C, and left standing for 30 minutes. This was denoted as one cycle. A discharge capacity for the first cycle was denoted as an initial capacity C0, a capacity of the battery after 1000 cycles was denoted as C1. In this case, a capacity retention rate of the battery was R=C1/C0×100%.

### Test results

Table 1 shows influence of thickness d µm of the conductive coating, mass per unit area X g/m² of fluorine-containing sulfonimide lithium salt contained in the electrochemical apparatus (such as lithium bis(fluorosulfonyl)imide (LiFSI) or lithium bis(trifluoromethylsulfonyl)imide (LiTFSI)) on one surface of the positive electrode current collector, and mass percentage Y% of first fluorine-containing metal salt (which includes fluorine-containing sulfonimide lithium salt and LiPF₆) in the electrolyte, on temperature rise and capacity retention rate of lithium-ion batteries. FEC represents fluoroethylene carbonate.

In all examples and comparative examples shown in Table 1, tensile strength of aluminum foil in Comparative Example 1-1 to Comparative Example 1-9 and Example 1-1 to Example 1-13 is 230 MPa; and tensile strength of aluminum foil in Example 1-14 is 140 MPa. A molar ratio of LiFSI to LiTFSI in Example 1-13 is 2:1.

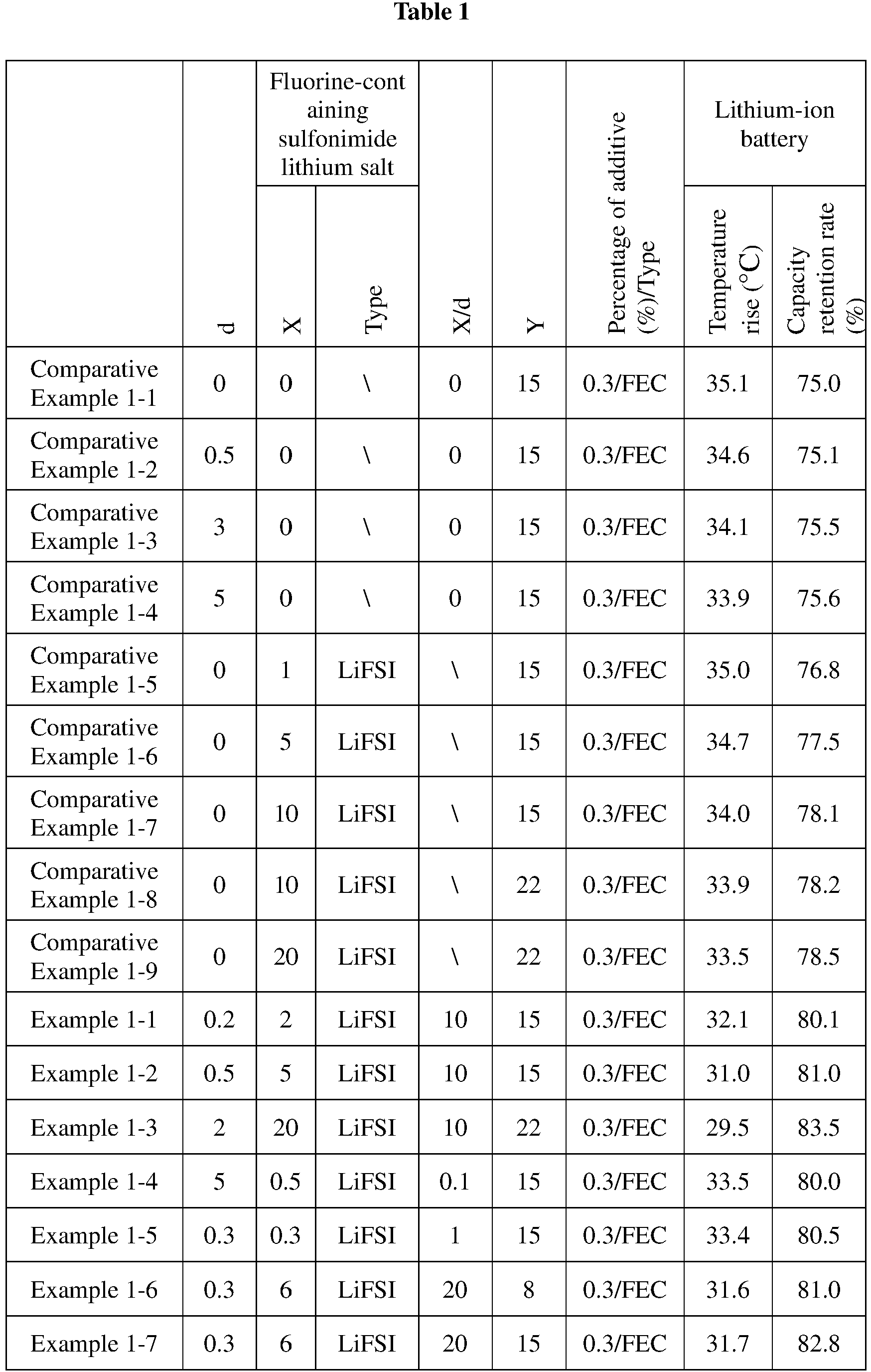

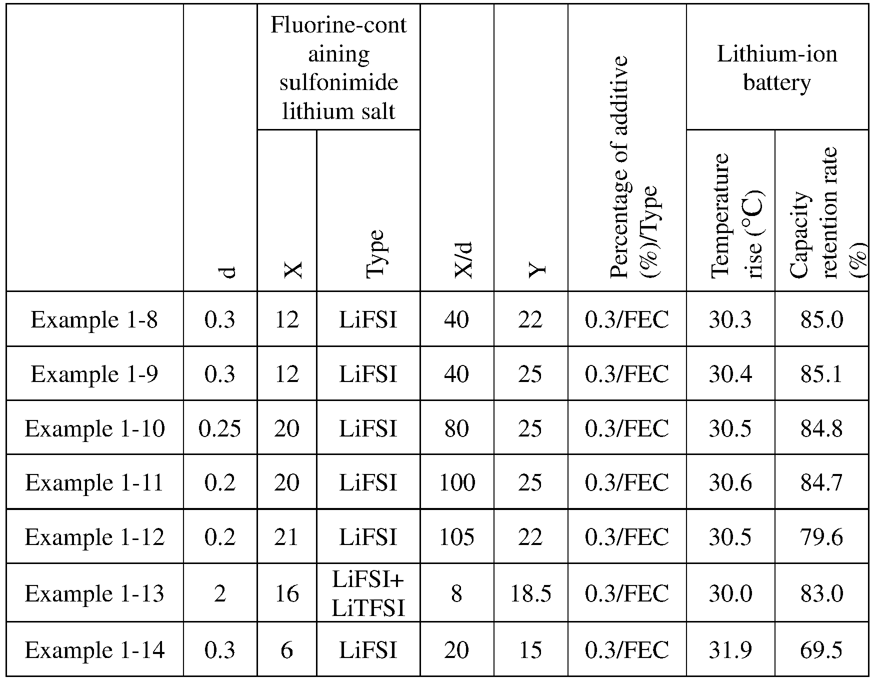

As shown in Table 1, by comparing Examples 1-1 to 1-13 with Comparative Examples 1-1 to 1-9, it can be seen that cooperation between the fluorine-containing sulfonimide lithium salt and the conductive coating reduced the temperature rise of the battery during discharging and increased the cycle capacity retention rate. This is mainly because the conductive coating enhanced conductivity of electrons between the active substance and the current collector, the fluorine-containing sulfonimide lithium salt enhanced ionic conduction, and the conductive coating and the fluorine-containing sulfonimide lithium salt cooperate to reduce heat production during high-rate discharging of the battery.

Table 2 shows influence of type and percentage of the second fluorine-containing metal salt and type and percentage of the additive in the electrolyte on temperature rise and capacity retention rate of the lithium-ion battery. All examples shown in Table 2 are further improved based on Example 1-7, that is, the difference lies only in the parameters in Table 2.

In Table 2, LiBF₄ represents lithium tetrafluoroborate, LiDFOB represents lithium difluoro(oxalato)borate, CsDFOB represents cesium difluoro(oxalato)borate, LiOTFP represents lithium tetrafluoro(oxalato)phosphate, LiPO₂F₂ represents lithium difluorophosphate, NaPO₂F₂ represents sodium difluorophosphate, FEC represents fluoroethylene carbonate, PS represents 1,3-propane sultone, and VC represents ethylene carbonate.

**Table 2**

| | Percentage of second fluorine-containing metal salt (%)/Type | Percentage of additive (%)/Type | Temperatu re rise (°C) | Capacity retention rate (%) |
|---|---|---|---|---|
| Example 1-7 | \ | 0.3/FEC | 31.7 | 82.8 |
| Example 2-1 | 0.01/LiBF₄ | 0.3/FEC | 31.0 | 83.1 |
| Example 2-2 | 0.1/LiBF₄ | 0.3/FEC | 30.8 | 83.2 |
| Example 2-3 | 0.1/LiDFOB | 0.3/FEC | 30.9 | 83.4 |
| Example 2-4 | 0.3/LiPO2F2 | 0.3/FEC | 30.3 | 83.5 |
| Example 2-5 | 0.5/LiDFOB | 0.3/FEC | 30.7 | 83.7 |
| Example 2-6 | 2.0/LiDFOB | 0.3/FEC | 30.6 | 84.0 |
| Example 2-7 | 2.0/LiDFOB +3.0/LiOTFP | 0.3/FEC | 30.6 | 84.4 |
| Example 2-8 | 2.2/LiDFOB +3.0/LiOTFP | 0.3/FEC | 30.8 | 84.2 |
| Example 2-9 | 0.1/LiBF₄ +0.2/LiDFOB | 0.3/FEC | 30.5 | 83.9 |
| Example 2-10 | 0.1/LiDFOB | 1/PS+0.3/FEC | 30.7 | 84.3 |
| Example 2-11 | 0.1/LiDFOB | 0.01/VC | 30.8 | 83.3 |
| Example 2-12 | 0.1/LiDFOB | 0.1/VC+1/PS | 30.7 | 83.5 |
| Example 2-13 | 0.1/LiDFOB | 4/PS+6/FEC | 30.6 | 85.2 |
| Example 2-14 | 0.1/LiDFOB | 4.4/PS+6/FEC | 30.7 | 85.1 |
| Example 2-15 | 0.3/NaPO₂F₂ | 0.3/FEC | 30.4 | 83.3 |
| Example 2-16 | 0.1/CsDFOB | 0.3/FEC | 30.8 | 83.2 |

As shown in Table 2, by comparing Example 2-1 to Example 2-9 with Example 1-7, it can be seen that addition of the second fluorine-containing lithium salt could further improve cycle life of the battery. This is mainly because molecules of the second fluorine-containing lithium salt contained a higher percentage of fluorine and could form a more stable protective layer on the surface of the current collector, so as to improve stability of the battery in long-term use.

By comparing Example 2-10 to Example 2-14 with Example 1-7, it can be seen that addition of a sultone additive or cyclic carbonate additive could further improve the capacity retention rate of the battery. This is mainly because the additive added to the film formed on the surface of the electrode plate and could repair the film formed on the surface of the electrode plate during cycling.

By comparing Example 2-15 and Example 2-16 with Example 1-7, it can be seen that when the second fluorine-containing metal salt was a sodium salt or cesium salt, a good effect could be still obtained.

Although some exemplary embodiments of this application have been illustrated and described, this application is not limited to the disclosed embodiments. On the contrary, a person of ordinary skill in the art will recognize that some modifications and changes can be made to the embodiments without departing from the spirit and scope of this application described in the appended claims.

## Claims

1. An electrochemical apparatus, comprising a positive electrode, a negative electrode, a separator, and an electrolyte, wherein the positive electrode comprises a positive electrode current collector, a positive electrode active substance layer, and a conductive coating disposed between the positive electrode current collector and the positive electrode active substance layer; the electrolyte comprises a first fluorine-containing metal salt, wherein the first fluorine-containing metal salt comprises at least one of fluorine-containing sulfonimide lithium salts;
the electrochemical apparatus satisfies the following relationship: 0.1≤X/d≤105,
wherein X g/m² is mass per unit area of the fluorine-containing sulfonimide lithium salts contained in the electrochemical apparatus on one surface of the positive electrode current collector; and d µm is thickness of the conductive coating on one surface of the positive electrode current collector.

2. The electrochemical apparatus according to claim 1, wherein 10≤X/d≤100.

3. The electrochemical apparatus according to claim 1, wherein 0.1≤X≤25.

4. The electrochemical apparatus according to claim 1, wherein 40≤X/d≤100 and/or 2≤X≤20.

5. The electrochemical apparatus according to claim 1, wherein the first fluorine-containing metal salt satisfies at least one of the following conditions (a) and (b):
(a) the fluorine-containing sulfonimide lithium salt comprises at least one of lithium salts represented by formula I, 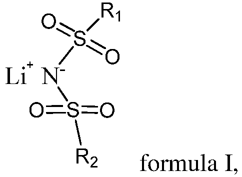 in formula I, R₁ and R₂ are each independently selected from fluorine, a C₁-C₄ alkyl group, or a C₁-C₄ fluoroalkyl group, wherein at least one of R₁ and R₂ comprises fluorine; and
(b) the fluorine-containing sulfonimide lithium salt comprises at least one of lithium bis(fluorosulfonyl)imide or lithium bis(trifluoromethylsulfonyl)imide.

6. The electrochemical apparatus according to claim 1, wherein the first fluorine-containing metal salt further comprises lithium hexafluorophosphate, wherein based on a total mass of the electrolyte, a mass percentage Y% of the first fluorine-containing metal salt satisfies 8≤Y≤25.

7. The electrochemical apparatus according to claim 1, wherein the electrolyte further comprises a second fluorine-containing metal salt, wherein the second fluorine-containing metal salt satisfies at least one of the following conditions (c) to (e):
(c) a mass percentage of fluorine atoms in a molecule of the second fluorine-containing metal salt is greater than or equal to 10%;
(d) based on a total mass of the electrolyte, a mass percentage of the second fluorine-containing metal salt ranges from 0.01% to 6.0%; and
(e) the second fluorine-containing metal salt comprises at least one of fluorine-containing alkali metal salts.

8. The electrochemical apparatus according to claim 7, wherein the second fluorine-containing metal salt satisfies at least one of the following conditions (1) to (3):
(1) the fluorine-containing alkali metal salt comprises at least one of fluorine-containing lithium salt, fluorine-containing sodium salt, or fluorine-containing cesium salt;
(2) the second fluorine-containing metal salt comprises at least one of fluorinated boron-containing lithium salt, fluorinated boron-containing sodium salt, fluorinated boron-containing cesium salt, fluorinated lithium phosphate salt, fluorinated sodium phosphate salt, fluorinated cesium phosphate salt, or lithium 4,5-dicyano-2-trifluoromethylimidazole; and
(3) based on the total mass of the electrolyte, the mass percentage of the second fluorine-containing metal salt ranges from 0.01% to 5.0%.

9. The electrochemical apparatus according to claim 1, wherein the electrolyte further comprises an additive, wherein the additive satisfies at least one of the following conditions (f) and (g):
(f) the additive comprises at least one of sultone, cyclic carbonate, or fluorinated cyclic carbonate; and
(g) based on a total mass of the electrolyte, a mass percentage of the additive ranges from 0.01% to 10%.

10. The electrochemical apparatus according to claim 1, wherein the conductive coating satisfies at least one of the following conditions (h) and (i):
(h) thickness d µm of the conductive coating satisfies 0.2≤d≤5; and
(i) the conductive coating comprises at least one of a carbon material or a conductive polymer material.

11. The electrochemical apparatus according to claim 1, wherein the electrochemical apparatus satisfies at least one of the following conditions (j) and (k):
(j) tensile strength of the positive electrode current collector is R MPa, wherein R≥150; and
(k) the positive electrode active substance layer comprises at least one of lithium cobalt oxide, nickel cobalt manganese, lithium iron phosphate, lithium manganate, or lithium-rich manganese-based material.

12. An electronic apparatus, comprising the electrochemical apparatus according to any one of claims 1 to 11.
